# FASCICULE DE BREVET EUROPEEN

(11) **EP 3 357 759 B1**
(45) Date de publication et mention de la délivrance du brevet: **25.08.2021**
(21) Numéro de dépôt: 18154992.4
(22) Date de dépôt: 02.02.2018
(51) Int. Cl.: B60R 13/02, F16B 5/06, F16B 21/18

(54) **DISPOSITIF DE FIXATION D'UN PANNEAU DE PORTE SUR UNE PAROI LATÉRALE DE CAISSE**
BEFESTIGUNGSVORRICHTUNG EINES TÜRPANEELS AUF DER SEITENWAND EINER KAROSSERIE
DEVICE FOR SECURING A DOOR PANEL TO A BODY SIDE WALL

(30) Priorité: 03.02.2017 FR 1750930
(43) Date de publication de la demande: 08.08.2018
(73) Titulaire: RENAULT s.a.s., 92100 Boulogne-Billancourt (FR)
(72) Inventeur: CHABASSOL, Ludovic, 28210 COULOMBS (FR)

(56) Documents cités:
- FR-A1- 2 853 027
- FR-A1- 3 038 019
- GB-A- 2 364 973
- US-A- 6 039 523

## Description

La présente invention concerne un dispositif de fixation d'un panneau de porte sur une paroi latérale de caisse de véhicule automobile.

Un panneau de porte, ou garniture, monté sur une paroi latérale de caisse doit présenter des moyens de fixation permettant son maintien correct sur la paroi latérale de caisse non seulement lors d'un usage normal, mais aussi en cas de choc latéral et ce, pour répondre à des contraintes d'homologation, afin d'éviter, par exemple, tout détachement intempestif du panneau de porte susceptible de gêner la trajectoire de sortie d'un coussin gonflable de sécurité se déployant entre un passager du véhicule et ledit panneau de porte.

On connaît dejà un dispositif de retenue d'un panneau de porte sur une paroi latérale de caisse, se présentant sous la forme d'une agrafe de fixation, qui a spécifiquement pour fonction de réaliser le maintien du panneau de porte sur la paroi latérale de caisse lors de chocs latéraux, voir par exemple le document FR 3 038 019 A.

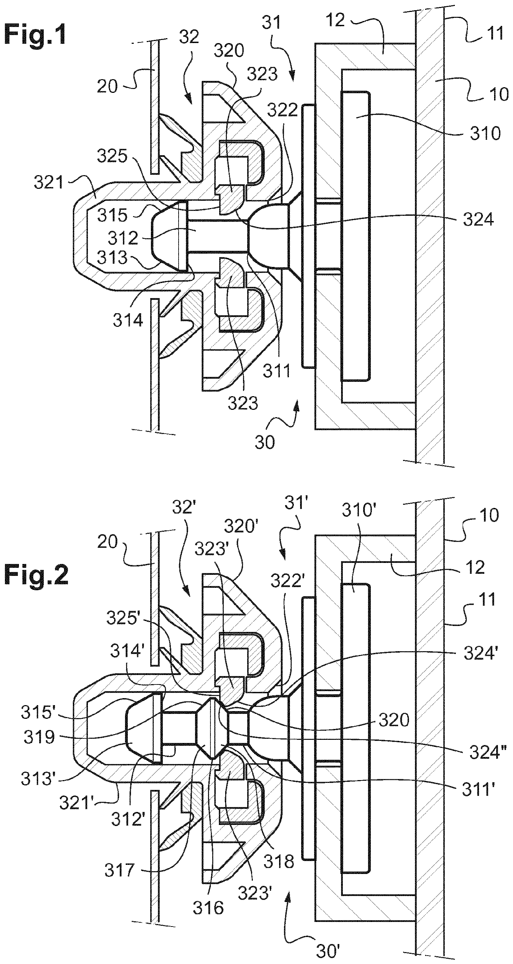

Un exemple d'une telle agrafe de fixation de panneau de porte est illustrée à la figure 1, qui montre une vue en coupe schématique de l'agencement d'une zone d'interface d'un panneau de porte avec une paroi latérale de caisse, qui est spécifiquement dédiée à la retenue du panneau de porte en cas de choc latéral. Comme illustré à la figure 1, un panneau de porte 10, ou garniture, s'étend en regard d'une paroi latérale de caisse 20 et est fixé sur cette paroi latérale de caisse 20 par l'intermédiaire d'au moins une agrafe de fixation 30 située du côté opposé à une face visible 11 du panneau de porte 10. Plus précisément, l'agrafe de fixation 30 comporte une première partie de fixation 31, pourvue d'une base 310 portée par une face interne 12 du panneau de porte 10 située à l'opposé de la face visible 11, et d'un embout mâle 311, qui s'étend depuis la base 310, en direction de la paroi latérale de caisse 20, dans un plan sensiblement transversal, soit sensiblement normal au plan de la paroi latérale de caisse 20. L'embout mâle 311 est formé d'un canon 312 muni d'une collerette d'encliquetage 313 à son extrémité distale, soit à son extrémité opposée à la base 310.

L'agrafe de fixation 30 comporte aussi une deuxième partie de fixation 32, portée par la paroi latérale de caisse 20. La deuxième partie de fixation 32 comprend un corps 320 qui comporte à l'arrière une partie tubulaire sous forme de queue creuse 321 et à l'avant une cavité ou chambre cylindrique 322 par où doit s'engager l'embout mâle 311. La cavité cylindrique 322 est séparée du volume cylindrique intérieur de la queue 321 par une partie de verrou comportant deux mâchoires 323 identiques coopérant entre elles et montées mobiles dans un logement entre une position rapprochée, qui correspond à une position de repos, où les mâchoires 323 sont rapprochées concentriquement et une position éloignée, où les deux mâchoires 323 vont s'écarter concentriquement l'une de l'autre. Dans la position rapprochée telle qu'illustrée à la figure 1, les mâchoires 323 définissent entre elles un anneau de diamètre intérieur compris entre le diamètre externe de l'embout mâle 311 et celui de la collerette 313, de sorte que dans cette position rapprochée, la collerette 313 est empêchée de se dégager vers l'avant du corps 320 (soit vers l'arrière de l'embout mâle par rapport à sa direction d'introduction). Elle est donc bloquée axialement de ce côté, ce qui empêche l'éjection de l'embout 311 du corps 320 de la deuxième partie de fixation 32. Dans la position éloignée, les deux mâchoires 323 vont s'écarter radialement l'une de l'autre, ce qui permet alors, grâce à cet escamotage, le passage de la collerette 313 en avant du corps 320 entre les deux mâchoires 323. Des boutons poussoirs sont prévus affleurant à la surface de l'enveloppe externe du corps 320 de la deuxième partie de fixation 32, de façon à permettre de manœuvrer la partie de verrou constitué des deux mâchoires 323 depuis la position rapprochée de repos vers la position éloignée lorsqu'ils sont actionnés par un utilisateur. Les mâchoires 323 sont rappelées élastiquement en position rapprochée de repos dans laquelle elles forment la butée radiale à l'arrière de la collerette 313 d'embout 311 quand celui-ci est mis en place dans le corps 320 de la deuxième partie de fixation 32.

Chaque mâchoire 323 comprend une partie d'attaque de diamètre interne réduit formant un chanfrein conique 324, suivie d'un élargissement cylindrique dont la face avant 325 forme un épaulement de butée transversale pour la collerette 313 qui comprend aussi vers l'avant du corps 320 une face de butée 314 sensiblement transversale tandis que sa face arrière 315 est inclinée et destinée à glisser sur le chanfrein d'attaque 324 des mâchoires, ce qui permet aux mâchoires de s'ouvrir automatiquement lors de l'introduction de l'embout mâle 311, l'embout 311 étant ensuite empêché d'être éjecté du corps 320 en cas de chocs latéraux par la venue en butée l'une sur l'autre des deux faces transversales 314, 325.

L'agrafe de fixation qui vient d'être décrite permet donc d'assurer efficacement la retenue en éjection du panneau de porte lors des chocs latéraux et partant, permet de garantir un parfait déploiement du coussin gonflable de sécurité. Cependant, elle ne permet pas de garantir un plaquage optimal du panneau de porte sur la paroi latérale de caisse par la même occasion. Aussi, il est également nécessaire de prévoir, à proximité de la zone d'interface dédiée à la retenue en éjection du panneau de porte en cas de choc latéral, au moins une autre zone d'interface de panneau de porte avec la paroi latérale de caisse, qui soit spécifiquement dédiée à la fonction d'assurer un plaquage correct du panneau de porte sur la paroi latérale de caisse lors d'un usage normal.

Dans ce contexte, la présente invention a pour but de proposer un dispositif de fixation d'un panneau de porte sur une paroi latérale de caisse de véhicule automobile, qui permette de diminuer le nombre de zones d'interface entre le panneau de porte et la paroi latérale de caisse tout en assurant une parfaite fixation du panneau de porte à la fois en termes de retenue du panneau en cas de chocs latéraux et en termes de plaquage du panneau sur la paroi latérale de porte.

Ce but est atteint grâce à un dispositif de fixation d'un panneau de porte sur une paroi latérale de caisse de véhicule automobile, du type comportant une première partie de fixation apte à être portée par une face interne du panneau de porte et destinée à coopérer avec une deuxième partie de fixation apte à être portée par la paroi latérale de caisse, la première partie de fixation comportant un embout mâle formé d'un canon muni d'une première collerette à son extrémité distale et la deuxième partie de fixation comprenant un corps comprenant d'un côté une partie tubulaire et de l'autre côté une partie formant une cavité cylindrique ouverte destinée à recevoir au moins l'extrémité distale du canon, la cavité cylindrique étant séparée du volume cylindrique intérieur de la partie tubulaire par une partie de verrou définissant un anneau de diamètre intérieur compris entre le diamètre externe de l'embout mâle et celui de la première collerette, destinée à venir bloquer en arrière la première collerette une fois que celle-ci est introduite dans la partie tubulaire. Selon l'invention, le canon est muni d'une deuxième collerette disposée en amont de la première collerette par rapport au sens d'introduction du canon, la deuxième collerette étant adaptée à être clipée dans la partie de verrou consécutivement à l'introduction de la première collerette dans la partie tubulaire, de manière à maintenir par clipage le panneau de porte dans une position d'écartement déterminé par raport à la paroi latérale de caisse, la deuxième collerette étant adaptée à être déclipée de la partie de verrou.

Ainsi, grâce à cet agencement, le même dispositif de fixation permet de remplir les deux fonctions, respectivement de tenue en éjection du panneau de porte en cas de choc latéral et de maintien en position précis du panneau de porte contre la paroi latérale de caisse en usage normal. Ces deux fonctions étaient auparavant dévolues à deux zones d'interface distinctes entre le panneau de porte et la paroi latérale de caisse, de sorte que grâce au dispositif de fixation, il est dorénavant possible de cumuler ces deux zones en une seule et procurer ainsi un gain de poids, un gain de place sur la pièce concernée et ce, sans impact en termes de montage.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la figure 1, qui a déjà été décrite, est une vue en coupe longitudinale d'un dispositif de fixation connu, mis en oeuvre pour l'agencement d'une zone d'interface d'un panneau de porte avec une paroi latérale de caisse, qui est spécifiquement dédiée à la retenue du panneau de porte en cas de choc latéral ;
- la figure 2 est une vue analogue du dispositif de la figure 1, qui a été modifié conformément à l'invention

Le dispositif de fixation de la figure 2 présente une structure analogue à celle du dispositif déjà décrit en référence à la figure 1 et comprend en grande partie les mêmes éléments. Ainsi, dans le mode de réalisation de l'invention qui va être décrit en référence à la figure 2, les éléments du dispositif de fixation qui sont identiques ou qui jouent le même rôle que ceux du dispositif de fixation représenté à la figure 1, sont désignés par les mêmes numéros de référence augmentés du signe prime et ne seront pas décrits à nouveau en détail.

Comme il va maintenant être décrit en référence à la figure 2, l'invention consiste donc à modifier le dispositif de fixation décrit en référence à la figure 1, de façon à intégrer à ce dispositif de fixation connu, en plus de la fonction de retenue en éjection du panneau de porte qui est déjà assurée, une fonction de clipage, permettant d'assurer le plaquage du panneau de porte 10 contre la paroi latérale de caisse 20. Pour ce faire, le canon 312' de l'embout mâle 311' constituant la première partie de fixation 31' du dispositif de fixation 30', est muni d'une deuxième collerette 316, qui est disposée en amont de la première collerette 313' agencée à l'extrémité distale du canon 312'. Par amont, on entend ici par rapport au sens d'introduction du canon 312' dans la deuxième partie de fixation 32'. Autrement dit, la deuxième collerette 316 est disposée sur le canon 312' de l'embout mâle 311', entre sa base et son extrémité distale.

Cette deuxième collerette 316 est conformée pour pouvoir être engagée dans la cavité cylindrique ouverte 322' à l'avant de la deuxième partie de fixation 32' pour pouvoir être insérée au travers des mâchoires 323' de la partie de verrou de la deuxième partie de fixation 32', consécutivement à l'introduction de la première collerette 313' située à l'extrémité distale de l'embout 311', et ainsi fixer le panneau de porte 10 dans cette configuration insérée ou de clipage. En d'autres termes, la deuxième collerette 316 constitue une zone de clipage au travers des mâchoires 323', de manière à permettre de maintenir par clipage, lorsque la deuxième collerette 316 est insérée dans les mâchoires 323', le panneau de porte 10 dans une position d'écartement déterminée par raport à la paroi latérale de caisse 20. En effet, lorsque la deuxième collerette 316 est clipée au travers des mâchoires 323', l'embout mâle 311' est sensiblement bloqué axialement des deux côtés par rapport à la deuxième partie de fixation 32' portée par la paroi latérale de caisse 20. La deuxième collerette 316 est en outre adaptée pour pouvoir être déclipée des mâchoires 323'. Autrement dit, la zone de clipage constituée par la deuxième colerette 316 est en outre adaptée à permettre le déclipage de cette zone des mâchoires 323'.

La deuxième collerette 316 présente pour ce faire une forme comportant deux troncs de cône identiques opposés 317 et 318, qui sont raccordés l'un à l'autre par leurs grandes bases respectives, tandis que leurs petites bases respectives sont à l'opposé l'une de l'autre par rapport aux deux grandes bases raccordées ensemble. Les deux grandes bases raccordées ensemble des deux troncs de cône 317 et 318 présentent un même diamètre, qui est supérieur au diamètre intérieur de l'anneau défini par les mâchoires 323' de la partie de verrou, et les petites bases des deux troncs de cône 317 et 318 présentent quant à elles un diamètre égal au diamètre externe de l'embout mâle 311'. Ainsi, dans le sens d'aval en amont, le premier tronc de cône 317 constituant la deuxième collerette 316, présente une face inclinée 319, qui est destinée à glisser sur le chanfrein d'attaque 324' des mâchoires 323' lors de l'introduction de l'embout mâle 311', ce qui permet aux mâchoires 323' de s'ouvrir automatiquement. Cette face inclinée 319 du premier tronc de cône 317 constitue donc avantageusement une pente de clipage de la deuxième collerette 316, qui facilite l'introduction de l'embout mâle 311'. Chaque mâchoire 323' comprend aussi un deuxième chanfrein conique 324", au niveau de sa face avant 325', de pente opposée à celle du premier chanfrein d'attaque 324', tandis que le deuxième tronc de cône 318 de la deuxième collerette 316, présente une face inclinée 320, qui est destinée à glisser sur ce deuxième chanfrein d'attaque 324" des mâchoires 323', permettant le déclipage de la deuxième collerette des mâchoires 323'. Cette face inclinée 320 du deuxième tronc de cône 318 constitue donc avantageusement une pente de déclipage de la deuxième collerette 316.

Cependant, même en cas de déclipage de la deuxième collerette 316, par exemple en cas de choc latéral, l'embout 311' est empêché d'être éjecté du corps 320' de la deuxième partie de fixation par la venue en butée l'une sur l'autre des deux faces transversales 314', 325', respectivement de la première collerette 313' située à l'extrémité distale de l'embout et de chaque mâchoire 323'.

Ainsi, en plus de réaliser la fonction de retenue en éjection du panneau de porte, le dispositif de fixation 30' de l'invention intègre, grâce à la présence de la deuxième collerette 316 en amont de la première 313', une fonction de clippage permettant avantageusement, au niveau d'une même zone d'interface entre le panneau de porte et la paroi latérale de caisse, d'assurer à la fois la retenue en éjection et le plaquage du panneau de porte sur la paroi latérale de caisse.

## Revendications

1. Dispositif de fixation d'un panneau de porte (10) sur une paroi latérale de caisse (20) de véhicule automobile, du type comportant une première partie de fixation (31') apte à être portée par une face interne (12) du panneau de porte (10) et destinée à coopérer avec une deuxième partie de fixation (32') apte à être portée par la paroi latérale de caisse, la première partie de fixation (31') comportant un embout mâle (311') formé d'un canon (312') muni d'une première collerette (313') à son extrémité distale et la deuxième partie de fixation (32') comprenant un corps (320') comprenant d'un côté une partie tubulaire (321') et de l'autre côté une partie formant une cavité cylindrique (322') ouverte destinée à recevoir au moins l'extrémité distale du canon (312'), la cavité cylindrique (322') étant séparée du volume cylindrique intérieur de la partie tubulaire (321') par une partie de verrou (323') définissant un anneau de diamètre intérieur compris entre le diamètre externe de l'embout mâle (311') et celui de la première collerette (313'), destinée à venir bloquer en arrière la première collerette (313') une fois que celle-ci est introduite dans la partie tubulaire (321'), **caractérisé en ce que** le canon (311') est muni d'une deuxième collerette (316) disposée en amont de la première collerette (313') par rapport au sens d'introduction du canon, la deuxième collerette (316) étant adaptée à être clipée dans la partie de verrou (323') consécutivement à l'introduction de la première collerette (313') dans la partie tubulaire (321'), de manière à maintenir par clipage le panneau de porte dans une position d'écartement déterminée par rapport à la paroi latérale de caisse,la deuxième collerette (316) étant adaptée à être déclipée de la partie de verrou (323').

2. Dispositif selon la revendication 1, **caractérisé en ce que** la deuxième collerette (316) présente une forme comportant deux troncs de cône identiques opposés (317, 318), raccordés l'un à l'autre par leurs grandes bases respectives présentant un même diamètre, supérieur au diamètre intérieur de l'anneau défini par la partie de verrou (323'), leurs petites bases respectives présentant un diamètre égal au diamètre externe de l'embout mâle (311).

3. Dispositif selon l'une quelconque des revendications précédentes, **caractérisé en ce que** la partie de verrou comprend deux mâchoires radialement opposées susceptibles d'être rapprochées ou écartées l'une de l'autre et de l'axe du corps (320'), les mâchoires étant rappelées élastiquement en position rapprochée de repos dans laquelle elles forment une butée radiale (325') à l'arrière de la première collerette (313') d'embout quand celui-ci est mis en place.

4. Dispositif selon la revendication 3, **caractérisé en ce que** chaque mâchoire de la partie de verrou (323') comprend un premier et un deuxième chanfrein conique (324', 324") de pentes respectives opposées, agencés respectivement du côté de la cavité cylindrique (322') et du côté de la partie tubulaire (321'), sur lesquelles sont destinées à glisser des faces inclinées (319, 320) respectives de la deuxième collerette (316).

## Patentansprüche

1. Vorrichtung zur Befestigung eines Türblechs (10) an einer Karosserieseitenwand (20) eines Kraftfahrzeugs, von der Art, die ein erstes Befestigungsteil (31') aufweist, das von einer Innenseite (12) des Türblechs (10) getragen werden kann und dazu bestimmt ist, mit einem zweiten Befestigungsteil (32') zusammenzuwirken, das von der Karosserieseitenwand getragen werden kann, wobei das erste Befestigungsteil (31') ein männliches Endstück (311') aufweist, das aus einer Hülse (312') ausgebildet ist, die an ihrem distalen Ende mit einem ersten Kragen (313') versehen ist, und wobei das zweite Befestigungsteil (32') einen Körper (320') umfasst, der auf der einen Seite ein rohrförmiges Teil (321') und auf der anderen Seite ein Teil umfasst, das einen offenen zylindrischen Hohlraum (322') ausbildet, der dazu bestimmt ist, zumindest das distale Ende der Hülse (312') aufzunehmen, wobei der zylindrische Hohlraum (322') vom inneren zylindrischen Volumen des rohrförmigen Teils (321') durch ein Verriegelungsteil (323') getrennt ist, das einen Ring mit einem Innendurchmesser definiert, der zwischen dem Außendurchmesser des männlichen Endstücks (311') und dem des ersten Kragens (313') liegt, das dazu bestimmt ist, den ersten Kragen (313') hinten zu blockieren, nachdem dieser in das rohrförmige Teil (321') eingeführt wurde, **dadurch gekennzeichnet, dass** die Hülse (311') mit einem zweiten Kragen (316) versehen ist, der relativ zur Einführungsrichtung der Hülse vor dem ersten Kragen (313') angeordnet ist, wobei der zweite Kragen (316) dazu geeignet ist, nach dem Einführen des ersten Kragens (313') in das rohrförmige Teil (321') in das Verriegelungsteil (323') eingeklipst zu werden, um das Türblech durch Einklipsen in einer bestimmten Abstandsposition relativ zur Karosserieseitenwand zu halten, wobei der zweite Kragen (316) dazu geeignet ist, aus dem Verriegelungsteil (323') ausgeklipst zu werden.

2. Vorrichtung nach Anspruch 1, **dadurch gekennzeichnet, dass** der zweite Kragen (316) eine Form aufweist, die zwei identische gegenüberliegende Kegelstümpfe (317, 318) umfasst, die durch ihre großen Grundflächen, die denselben Durchmesser aufweisen, der größer ist als der Innendurchmesser des durch das Verriegelungsteil (323') definierten Rings, miteinander verbunden sind, wobei ihre jeweiligen kleinen Grundflächen einen Durchmesser aufweisen, der dem des Außendurchmessers des männlichen Endstücks (311) entspricht.

3. Vorrichtung nach einem der vorangehenden Ansprüche, **dadurch gekennzeichnet, dass** das Verriegelungsteil zwei radial gegenüberliegende Backen aufweist, die aufeinander zu oder voneinander und von der Achse des Körpers (320') weg bewegbar sind, wobei die Backen elastisch in eine angenäherte Ruheposition zurückgeführt werden, in der sie einen radialen Anschlag (325') hinter dem ersten Endstückkragen (313') ausbilden, wenn dieser eingesetzt ist.

4. Vorrichtung nach Anspruch 3, **dadurch gekennzeichnet, dass** jede Backe des Verriegelungsteils (323') eine erste und eine zweite konische Abschrägung (324', 324") mit jeweils entgegengesetzten Schrägen aufweist, die jeweils auf der Seite des zylindrischen Hohlraums (322') bzw. auf der Seite des rohrförmigen Teils (321') angeordnet sind, auf denen jeweilige geneigte Flächen (319, 320) des zweiten Kragens (316) gleiten sollen.

## Claims

1. Device for securing a door panel (10) to a motor vehicle body shell side wall (20), of the type comprising a first securing part (31') able to be borne by an internal face (12) of the door panel (10) and intended to collaborate with a second securing part (32') able to be borne by the body shell side wall, the first securing part (31') comprising a male end piece (311') formed of a barrel (312') equipped with a first flange (313') at its distal end and the second securing part (32') comprising a body (320') comprising, on the one side, a tubular part (321') and, on the other side, a part forming an open cylindrical cavity (322') intended to accept at least the distal end of the barrel (312'), the cylindrical cavity (322') being separated from the interior cylindrical volume of the tubular part (321') by a latching part (323') defining a ring of an inside diameter comprised between the outside diameter of the male end piece (311') and that of the first flange (313') and intended to rearwardly block the first flange (313') once it has been introduced into the tubular part (321'), **characterized in that** the barrel (311') is equipped with a second flange (316) positioned upstream of the first flange (313') with respect to the direction of insertion of the barrel, the second flange (316) being able to be clipped into the latching part (323') following insertion of the first flange (313') into the tubular part (321'), so as to keep the door panel clipped in a position of determined separation with respect to the body shell side wall, the second flange (316) being able to be undipped form the latching part (323').

2. Device according to Claim 1, **characterized in that** the second flange (316) has a shape comprising two opposing identical cone frustums (317, 318) connected to one another by their respective large bases which have the same diameter, which is greater than the inside diameter of the ring defined by the latching part (323'), their respective small bases having a diameter equal to the outside diameter of the male end piece (311).

3. Device according to either one of the preceding claims, **characterized in that** the latching part comprises two radially opposed jaws capable of being moved closer to or further from one another and the axis of the body (320'), the jaws being returned elastically to a closer-together position of rest in which they form a radial abutment (325') to the rear of the end piece first flange (313') when the end piece is put in place.

4. Device according to Claim 3, **characterized in that** each jaw of the latching part (323') comprises a first and a second conical chamfer (324', 324") with opposite respective slopes, arranged respectively one on the side of the cylindrical cavity (322') and one on the side of the tubular part (321') and along which respective inclined faces (319, 320) of the second flange (316) are intended to slide.
